# EUROPEAN PATENT APPLICATION

(11) **EP 0 845 372 A1**
(43) Date of publication of application: **03.06.1998**
(21) Application number: 96119137.6
(22) Date of filing: 29.11.1996
(51) Int. Cl.: B60B 3/14

(54) **Center hub converter**

(71) Applicant: Chen, Fu-Te, Chang An Li, Taoyuan City (TW)
(72) Inventor: Chen, Fu-Te, Chang An Li, Taoyuan City (TW)
(74) Representative: Lippert, Hans, Dipl.-Ing.

(57) **Abstract**

A center hub converter comprises a round disk (2), an axle (26) extending from the round disk (2), a plurality of round holes (21) formed on the round disk (2), and a pin hole (25) formed on the axle (26). A plurality of outer threads (24) are formed on the axle (26). A toothed flange (23) which has a plurality of recesses (22) is disposed on the round disk (2) to enclose a rear portion of the axle (26). An elastic pin (4) is inserted in the pin hole (25). A wheel disk (5) of a vehicle has four holes to receive four corresponding bolts (51). The round disk (2) is disposed on the wheel disk (5) so that the bolts (51) pass through the corresponding round holes (21) on the round disk (2). Four small nuts (52) fasten the corresponding bolts (51). A wheel rim (1) has four spokes (10), a serrated center hole (11) and a plurality of retaining grooves (12) in the serrated center hole (11). The serrated center hole (11) receives the axle (26). A fixed nut (3) which has an inner thread (30) is disposed on an end of the axle (26) to fasten the axle (26) and the wheel rim (1) together.

## Description

### BACKGROUND OF THE INVENTION

The invention relates to a center hub converter. More particularly, the invention relates to a center hub converter for various types of tires.

There are various types of tires. Each type of tire has a unique center hub and a unique wheel rim. The wheel rim and the center hub are made in one piece. The center hub cannot be detached from the wheel rim. Therefore, one type of center hub and wheel rim cannot be replaced by another type of center hub and wheel rim.

### SUMMARY OF THE INVENTION

An object of the invention is to provide a center hub converter which can be detached from a wheel rim manually.

Another object of the invention is to provide a center hub converter and a wheel rim which are suitable for various types of vehicle tires.

Accordingly, a center hub converter comprises a round disk, an axle extending from the round disk, a plurality of round holes formed on the round disk, and a pin hole formed on the axle. A plurality of outer threads are formed on the axle. A toothed flange which has a plurality of recesses is disposed on the round disk to enclose a rear portion of the axle. An elastic pin is inserted in the pin hole. A wheel disk has four holes to receive four corresponding bolts. The round disk is disposed on the wheel disk so that the bolts pass through the corresponding round holes on the round disk. Four small nuts fasten the corresponding bolts. A wheel rim has four spokes, a serrated center hole and a plurality of retaining grooves in the serrated center hole. The serrated center hole receives the axle. A fixed nut which has an inner thread is disposed on an end of the axle to fasten the axle and the wheel rim together.

### BRIEF DESCRIPTION OF THE DRAWINGS

FIG. 1 is a perspective assembly view of a center hub converter and a wheel rim;
FIG. 2 is a perspective exploded view of a center hub converter and a wheel rim;
FIG. 3 is a partially sectional view of a center hub converter and a wheel rim; and
FIG. 4 is a schematic view illustrating an application of a center hub converter and a wheel rim.

### DETAILED DESCRIPTION OF THE INVENTION

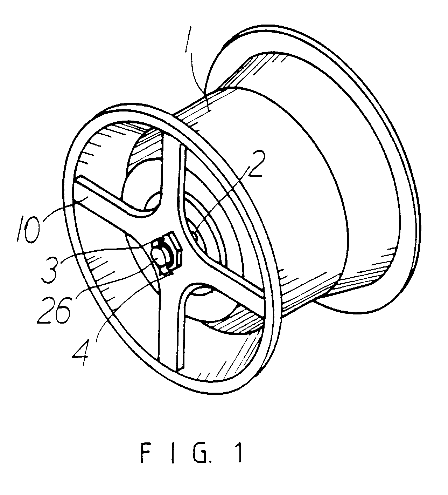

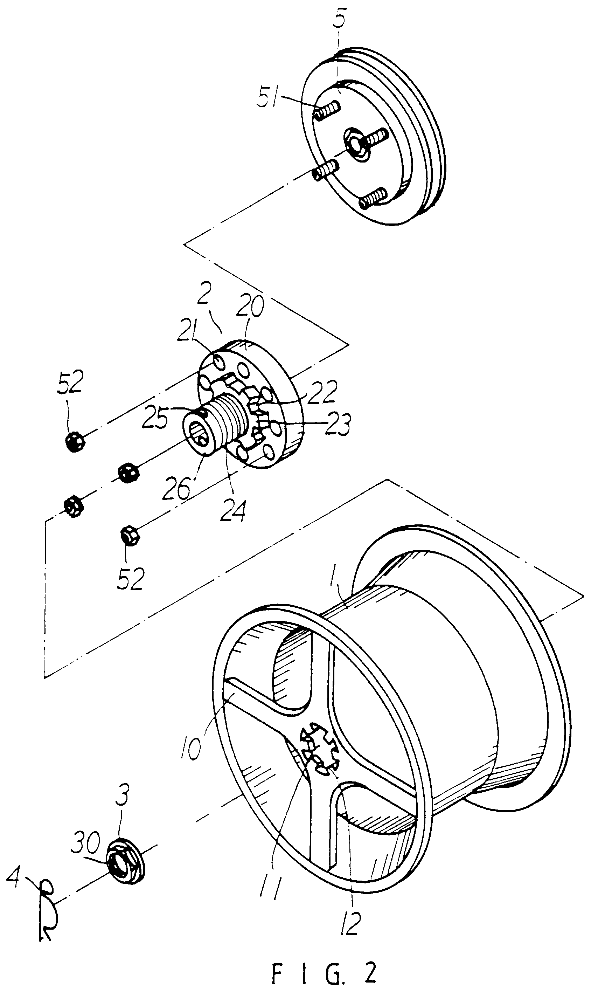

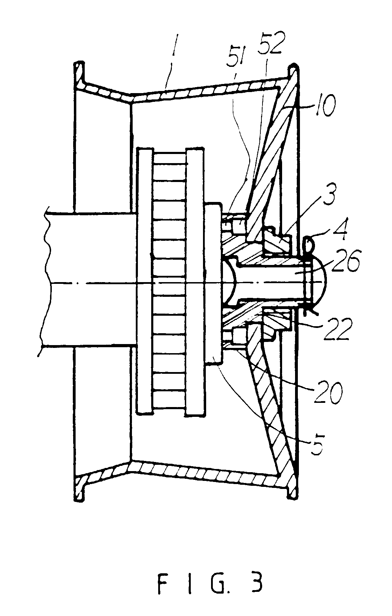

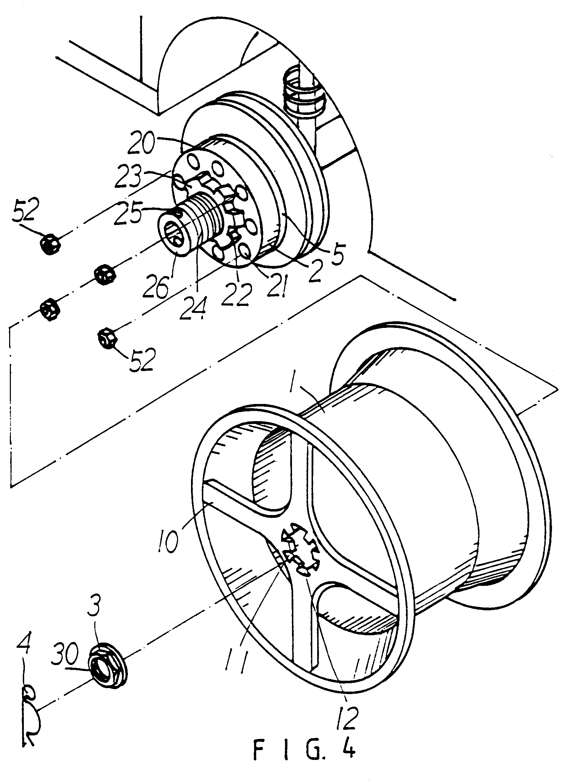

Referring to FIGS. 1 to 4, a center hub converter comprises a round disk 2, an axle 26 extending from the round disk 2, a plurality of round holes 21 formed on the round disk 2, and a pin hole 25 formed on the axle 26. A plurality of outer threads 24 are formed on the axle 26. A toothed flange 23 which has a plurality of recesses 22 is disposed on the round disk 2 to enclose a rear portion of the axle 26. An elastic pin 4 is inserted in the pin hole 25.

A wheel disk 5 of a vehicle has four holes to receive four corresponding bolts 51. The round disk 2 is disposed on the wheel disk 5 so that the bolts 51 pass through the corresponding round holes 21 on the round disk 2. Four small nuts 52 fasten the corresponding bolts 51. A wheel rim 1 has four spokes 10, a serrated center hole 11 and a plurality of retaining grooves 12 in the serrated center hole 11. The serrated center hole 11 receives the axle 26. A fixed nut 3 which has an inner thread 30 is disposed on an end of the axle 26 to fasten the axle 26 and the wheel rim 1 together.

The width 20 of the round disk 2 is predetermined.

The invention is not limited to the above embodiment but various modification thereof may be made. Further, various changes in form and detail may be made without departing from the scope of the invention.

## Claims

1. A center hub converter comprising:
a round disk (2), an axle (26) extending from the round disk (2), a plurality of holes (21) formed on the round disk (2), an outer thread (24) formed on the axle (26), and a toothed flange (23) which has a plurality of recesses (22) disposed on the round disk (2) to enclose a rear portion of the axle (26),
the round disk (2) adapted to be mounted on a wheel disk (5) of a vehicle by means of bolts (51) passing through corresponding ones of said holes (21) on the round disk (2),
a wheel rim (1) having a serrated center hole (11) and a plurality of retaining grooves (12) in the serrated center hole (11),
the serrated center hole (11) receiving the axle (26) and engaging the toothed flange (23), and
a fixing nut (3) which has an inner thread (30) to engage the outer thread (24) formed on an end of the axle (26) to fasten the axle (26) and the wheel rim (1) together.

2. A center hub converter according to claim 1 further comprising:
a pin hole (25) formed on the axle (26), and
an elastic pin (4) inserted in the pin hole (25).

3. A center hub converter according to claim 1 or 2 wherein said bolts (51) are received in holes provided in the wheel disk (5) of the vehicle.

4. A center hub converter according to claim 3 further comprising:
nuts (52) to be screwed on the bolts (51) to fasten the round disk (2) on the wheel disk (5) of the vehicle.

5. A center hub converter according to anyone of the preceding claims wherein:
said wheel rim (1) having a plurality of spokes (10) extending from the serrated center hole (11) to the outside of the wheel rim (1).

6. A center hub converter according to anyone of the preceding claims wherein:
the wheel disk (5) of the vehicle has four holes to receive four corresponding bolts (51).

7. A center hub converter according to anyone of the preceding claims wherein:
a plurality of outer threads (24) is formed on the axle (26).

8. A center hub converter according to anyone of the preceding claims wherein:
said plurality of holes (21) formed on the round disk (2) exceeds the number of bolts (51) provided on the wheel disk (5) of the vehicle.
